# EUROPÄISCHE PATENTSCHRIFT

(11) **EP 0 625 242 B1**
(45) Veröffentlichungstag und Bekanntmachung des Hinweises auf die Patenterteilung: **21.06.1995**
(21) Anmeldenummer: 93903899.8
(22) Anmeldetag: 03.02.1993
(51) Int. Cl.: F01D 25/12, F02C 7/12

(54) **KÜHLLUFTVERSORGUNG EINES TURBINENGEHÄUSES EINER FLUGGASTURBINE**
COOLING AIR SUPPLY FOR THE HOUSING OF AN AIRPLANE GAS TURBINE
ALIMENTATION EN AIR DE REFROIDISSEMENT DE LA CARCASSE D'UNE TURBINE A GAZ D'AVION

(30) Priorität: 04.02.1992 GB 9202345
(43) Veröffentlichungstag der Anmeldung: 23.11.1994
(73) Patentinhaber: BMW Rolls-Royce GmbH, 61402 Oberursel (DE)
(72) Erfinder: TAYLOR, Michael, Charles, Chellaston Derby (GB)
(74) Vertreter: Bücken, Helmut
(86) Internationale Anmeldenummer: EP9300238
(87) Internationale Veröffentlichungsnummer: WO9315307

(56) Entgegenhaltungen:
- DE-A- 2 113 429
- US-A- 4 079 587
- US-A- 4 542 623
- US-A- 4 709 545

## Beschreibung

Die Erfindung betrifft eine Anordnung zur Versorgung eines Turbinengehäuses insbesondere einer Fluggasturbine mit Kühlluft mit zumindest zwei von einer Verdichterstufe abzweigenden Kühlluftleitungen, von denen eine im Mantelraum des Turbinengehäuses mündet und die zweite den Mantelraum durchdringt und in einem Lagerraum für die Turbinenlager mündet.

Eine Kühlluft-Versorgungsanordnung für ein Turbinengehäuse mit einer einzigen Kühlluftleitung ist in der US 4 542 623 gezeigt, eine Anordnung nach dem Oberbegriff des Anspruchs 1 bildet zumindest internen Stand der Technik. Da derartige, zumindest abschnittsweise außerhalb des Turbinengehäuses verlaufende Kühlluftleitungen beim Betrieb beispielsweise der Fluggasturbine beschädigt werden können, ist es Aufgabe der Erfindung, Maßnahmen aufzuzeigen, die stets eine zumindest ausreichende Kühlung des Turbinengehäuses und insbesondere des Turbinengehäuse-Mantelraumes sowie des Turbinengehäuse-Lagerraumes für die Turbinenlager sicherstellt.
Zur Lösung dieser Aufgabe ist vorgesehen, daß die zweite Kühlluftleitung im Mantelraum des Turbinengehäuses zumindest eine Luftübertrittsöffnung aufweist. Vorteilhafte Aus- und Weiterbildungen sind Inhalt der Unteransprüche.

Erfindungsgemäß gelangt nicht nur über die erste, im Mantelraum des Turbinengehäuses mündende Kühlluftleitung Kühlluft in den Mantelraum, sondern darüber hinaus auch über die zweite Kühlluftleitung, die vorrangig der Kühlung des Lagerraumes dient und die hierzu den Mantelraum durchquert. Erfindungsgemäß sind in dieser zweiten Kühlluftleitung im Bereich des Mantelraumes Luftübertrittsöffnungen vorgesehen, so daß ein Kühlluftaustritt in den Mantelraum möglich ist. Ist somit beispielsweise die erste, im Mantelraum selbst mündende Kühlluftleitung gebrochen, so kann immer noch über die zweite Kühlluftleitung sowie die darin vorgesehenen Luftübertrittsöffnungen Kühlluft in den Mantelraum gelangen. Ist jedoch die zweite Kühlluftleitung gebrochen und die erste Kühlluftleitung intakt, so kann aus dem Mantelraum über die Luftübertrittsöffnungen in der zweiten Kühlluftleitung Kühlluft in diese gelangen, so daß auch dann dem Lagerraum des Turbinengehäuses Kühlluft zugeführt werden kann. Dabei wirken die Luftübertrittsöffnungen, die beispielsweise als Löcher in der als Rohr ausgebildeten zweiten Kühlluftleitung gestaltet sein können, sozusagen als 3-Wege-Ventil.

Im Sinne einer gleichmäßigen Kühlluftverteilung, aber auch aus Redundanzgründen können über dem Umfang des Turbinengehäuses verteilt dabei jeweils zwei Kühlluftleitungen des erstgenannten Typs sowie zwei Kühlluftleitungen des zweitgenannten Typs vorgesehen sein. Dies sowie weitere Vorteile der Erfindung geht auch aus der beigefügten Skizze eines bevorzugten Ausführungsbeispieles hervor. Es zeigt
- Fig. 1: den Teil eines Längsschnitts durch ein erfindungsgemäßes Turbinengehäuse im Bereich einer zweiten Kühlluftleitung, die intakt ist,
- Fig. 2: einen Teil-Längsschnitt durch das Gehäuse im Bereich einer intakten ersten Kühlluftleitung, sowie
- Fig. 3: den Schnitt gemäß Fig. 1 bei gebrochener Kühlluftleitung.

Einem Mantelraum 3 sowie einem Lagerraum 4 eines Turbinengehäuses einer Fluggasturbine wird Kühlluft über eine erste Kühlluftleitung 1 sowie eine zweite Kühlluftleitung 2 zugeführt. Die beiden Kühlluftleitungen 1, 2 zweigen von der vierten Verdichterstufe der zugeordneten Fluggasturbine ab (nicht gezeigt). Die beiden Kühlluftleitungen 1, 2 sind als Rohre ausgebildet und verlaufen bereichsweise außerhalb des Turbinengehäuses. Die erste Kühlluftleitung 1 mundet im Mantelraum 3, die zweite Kühlluftleitung 2 mündet im Lagerraum 4. Erforderlich ist eine höchste Zuverlässigkeit des gezeigten Kühlsystemes, da sowohl das Turbinengehäuse selbst über seinen Mantelraum 3 als auch die Turbinenlager, die im separaten Lagerraum 4 angeordnet sind, unter allen Umständen sicher gekühlt werden müssen.

Erzielt wird diese Sicherheit des Kühlsystemes dadurch, daß die zweite Kühlluftleitung 2 im Bereich des Mantelraumes 3 zumindest eine, bevorzugt jedoch mehrere Luftübertrittsöffnungen 5 aufweist. In äußerst einfacher Ausgestaltung sind diese Luftübertrittsöffnungen 5 als Löcher in der Rohrwand ausgebildet.

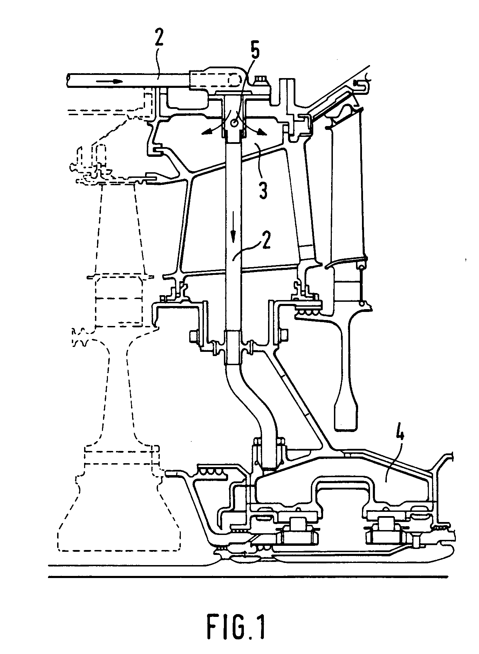

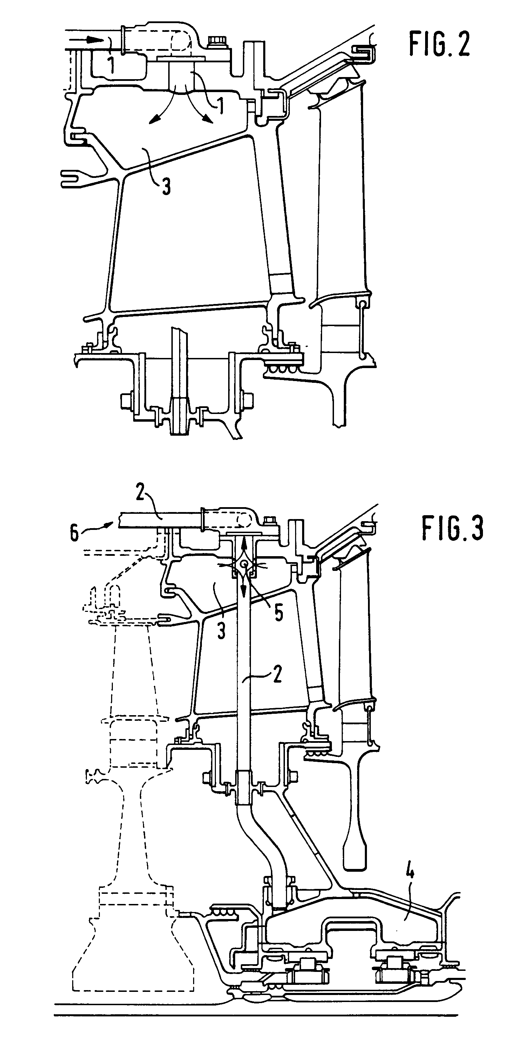

Die Fig. 1 und 2 zeigen die Verhältnisse im Normalbetrieb bei Kühlluftförderung. Über die zweite Kühlluftleitung 2 gelangt Kühlluft in den Lagerraum 4, ein geringfügiger Kühlluftstrom gelangt dabei auch durch die Luftübertrittsöffnungen 5 in den Mantelraum 3. Seine intensive Kühlung erfährt der Mantelraum 3 aber insbesondere durch den Kühlluftstrom, der über die erste Kühlluftleitung 1 zugeführt wird.
Ist hingegen die zweite Kühlluftleitung außerhalb des Turbinengehäuses gebrochen, wie dies in Fig. 3 bei der Bezugsziffer 6 dargestellt ist, so gelangt zwar weiterhin Kühlluft über die erste Kühlluftleitung 1 in den Mantelraum 3, eine direkte Versorgung des Lagerraumes 4 mit Kühlluft über die zweite Kühlluftleitung 2 ist dann jedoch nicht mehr gewährleistet. Als Abhilfe tritt nun Kühlluft aus dem Mantelraum 3 über die Luftübertrittsöffnungen 5 in die zweite Kühlluftleitung 2, so daß auch bei Bruch der zweiten Kühlluftleitung 2 außerhalb des Turbinengehäuses weiterhin Kühlluft in den Lagerraum 4 gelangen kann. Dieser Kühlluftübertritt über die Luftübertrittsöffnungen 5 ist durch Pfeile dargestellt.
Obwohl nicht gezeigt, funktioniert dieses redundante System auch für die Fälle, in denen die erste Kühlluftleitung 1 außerhalb des Turbinengehäuses gebrochen ist. Dann erfolgt die Kühlluftzufuhr zum Mantelraum 3 lediglich über die zweite Kühlluftleitung 2, wobei der benötigte Mindest-Kühlluftstrom ebenfalls wieder über die Luftübertrittsöffnungen 5 aus der zweiten Kühlluftleitung 2 in den Mantelraum 3 gelangen kann.

Selbstverständlich können die beiden Kühlluftleitungen 1, 2 jeweils mehrfach vorhanden sein. In einer bevorzugten Ausführungsform sind beispielsweise jeweils zwei erste Kühlluftleitungen 1 sowie zwei zweite Kühlluftleitungen 2 vorhanden, wobei diese Kühlluftleitungen jeweils einander gegenüberliegend über dem Umfang des Turbinengehäuses verteilt sind. Dies sowie weitere Details können jedoch auch durchaus abweichend vom gezeigten Ausführungsbeispiel gestaltet sein, ohne den Inhalt der Patentansprüche zu verlassen.

## Patentansprüche

1. Anordnung zur Versorgung eines Turbinengehäuses, insbesondere einer Fluggasturbine mit Kühlluft mit zumindest zwei von einer Verdichterstufe abzweigenden Kühlluftleitungen (1, 2), von denen eine (erste Kühlluftleitung 1) im Mantelraum (3) des Turbinengehäuses mündet und die zweite (zweite Kühlluftleitung 2) den Mantelraum (3) durchdringt und in einem Lagerraum (4) für die Turbinenlager mündet,
dadurch gekennzeichnet, daß die zweite Kühlluftleitung (2) im Mantelraum (3) zumindest eine Luftübertrittsöffnung (5) aufweist.

2. Anordnung nach Anspruch 1,
dadurch gekennzeichnet, daß die zweite, den Mantelraum (3) durchdringende Kühluftleitung (2) im wesentlichen als durchgehendes Rohr ausgebildet ist, dessen Rohrwand im Bereich des Mantelraumes (3) mehrere als Luftübertrittsöffnungen (5) fungierende Löcher aufweist.

3. Anordnung nach Anspruch 1 oder 2,
gekennzeichnet durch insgesamt vier über dem Umfang des Turbinengehäuses verteilt angeordnete Kühlluftleitungen, von denen zwei einander im wesentlichen gegenüberliegend im Mantelraum (3) enden und zwei weitere, einander ebenfalls im wesentlichen gegenüberliegend im Lagerraum (4) münden und im Bereich des Mantelraumes mit Luftübertrittsöffnungen (5) versehen sind.

## Claims

1. An arrangement for the supply of cooling air to a turbine housing, especially that of an aircraft gas turbine, comprising at least two cooling air conduits (1, 2) branching from a compressor stage, of which one (first cooling air conduit 1) opens into the jacket cavity (3) of the turbine housing and the second (second cooling air conduit 2) penetrates through the jacket cavity (3) and opens into a bearing casing (4) for the turbine bearings,
characterised in that the second cooling air conduit (2) has at least one air flow opening (5) in the jacket cavity (3).

2. An arrangement according to claim 1,
characterised in that the second cooling air conduit (2) penetrating through the jacket cavity (3) is substantially in the form of a continuous pipe, with its pipe wall in the region of the jacket cavity (3) being provided with a plurality of holes acting as air flow openings (5).

3. An arrangement according to either claim 1 or 2,
characterised by a total of four cooling air conduits distributed over the circumference of the turbine housing, two of which end in the jacket cavity (3) substantially opposite each other, while two further conduits open into the bearing casing (4) and similarly lie substantially opposite each other and are provided with air flow openings (5) in the region of the jacket cavity.

## Revendications

1. Système d'alimentation en air de refroidissement d'une carcasse de turbine, notamment une turbine à gaz d'avion, utilisant au moins deux canalisations d'amenée d'air frais (1, 2) issues d'un étage de compresseur et dont l'une (première canalisation 1) débouche dans l'enveloppe (3) entourant la carcasse tandis que la seconde (canalisation 2) traverse cette enveloppe pour déboucher dans un logement (4) contenant des paliers de la turbine, caractérisé en ce que la seconde canalisation (2) présente, au niveau de l'enveloppe (3), au moins un orifice de passage (5).

2. Système selon la revendication 1, caractérisé en ce que la seconde canalisation (2)d'air frais traversant l'enveloppe (2) est constituée essentiellement par un tube dont la paroi, au niveau de l'enveloppe (3), est pourvue de plusieurs trous constituant des orifices de passage (5).

3. Système selon la revendication 1 ou 2, caractérisé en ce qu'il comporte en tout quatre canalisations à air frais régulièrement réparties à la périphérie de la carcasse de la turbine, dont deux, situées sensiblement à l'opposé l'une de l'autre, se terminent dans l'enveloppe (3) tandis que les deux autres, également sensiblement opposées, débouchent dans le logement des paliers (4) et sont pourvues au niveau de l'enveloppe, d'orifices de passage d'air (5).
